# EUROPEAN PATENT APPLICATION

(11) **EP 4 020 927 A1**
(43) Date of publication of application: **29.06.2022**
(21) Application number: 21217040.1
(22) Date of filing: 22.12.2021
(51) Int. Cl.: H04L 45/02, H04L 45/021, H04L 45/12, H04L 45/24, H04L 45/00

(54) **PACKET FORWARDING ON NON-COHERENT PATHS**

(30) Priority: 28.12.2020 US 202017134879
(71) Applicant: Nokia Solutions and Networks Oy, 02610 Espoo (FI)
(72) Inventor: DUTTA, Pranjal Kumar, Sunnyvale (US)
(74) Representative: Novagraaf Technologies

(57) **Abstract**

An apparatus comprises means for performing: determining at least one coherent path through a network to a destination by applying a distributed path algorithm to information representing a topology of a network including the destination; determining at least one non-coherent path through the network to the destination; and selectively transmitting a first packet along the coherent path or the non-coherent path to the destination.

## Description

### BACKGROUND

Networks that operate according to the Internet Protocol (IP) include nodes (such as routers) that forward packets over corresponding links between the nodes. A link-state protocol floods the status of locally connected networks and links of the nodes across the network. Each node builds an identical copy of the network topology based on the status information and then independently computes the paths to every other node (and any advertised networks) using path algorithms such as Dijkstra's Shortest Path First (SPF) algorithm, which computes the shortest paths between the nodes in a graph that represents the network. Since the nodes compute the shortest paths using identical copies of the network topology, the paths computed by the nodes are "coherent," which means that a path from a node to a destination includes the paths from every transit node traversed by the path to the destination. For example, if a first node computes a first path that traverses a second node and a third node to a fourth (destination) node, the second node computes a third path that traverses the third node to the fourth node, and the third node computes a fourth path directly to the fourth node. Thus, the third path includes the fourth path, the second path includes the third path, and the first path includes the second path. In some cases, the path algorithm implemented at a node identifies multiple coherent paths that incur the same costs to convey packets between a source node and a destination. These paths are referred to as equal cost multiple paths (ECMP) and the ECMP can be used for load-balancing or fast rerouting. Coherent paths and networks are also formed in ethernet networks using Shortest Path Bridging (SPB) as a pathfinding algorithm to determine paths between ethernet bridges, which are the nodes in the ethernet network.

### SUMMARY

The scope of the protection is defined by the appended claims.

According to a first aspect, an apparatus comprises means for performing: determining at least one coherent path through a network to a destination by applying a distributed path algorithm to information representing a topology of a network including the destination; determining at least one non-coherent path through the network to the destination; and selectively transmitting a first packet along the coherent path or the non-coherent path to the destination.

The apparatus may comprise means for performing: storing a routing table comprising information representing an address or identifier of the destination, at least one next-hop node for the coherent path, and at least one ordered list of links or nodes traversed by the at least one non-coherent path.

The apparatus may comprise means for performing at least one of: transmitting the first packet along the at least one non-coherent path in response to detecting at least one of a failure on a link to at least one next-hop node for the at least one coherent path and an error on the link to the at least one next-hop node for the at least one coherent path; or performing load balancing across the at least one coherent path and the at least one non-coherent path.

The apparatus may comprise means for performing appending the at least one ordered list of links or nodes traversed by the at least one non-coherent path to the first packet; and transmitting the first packet along the at least one non-coherent path indicated by the at least one ordered list of links or nodes.

The apparatus may comprise means for performing: receiving a second packet comprising the address or identifier of the destination and an ordered list of links or nodes indicating the at least one non-coherent path.

The apparatus may comprise means for performing: identifying an entry in the ordered list of links or nodes that includes an adjacent link that is adjacent to the node.

The apparatus may comprise means for performing: popping the entry from the ordered list in response to identifying the entry including the adjacent link; and forwarding the second packet over the adjacent link to the next node in the non-coherent path.

The apparatus may comprise means for performing: identifying a plurality of non-coherent paths to the destination.

The apparatus may comprise means for performing: selectively transmitting packets along the coherent path or at least one of the plurality of non-coherent paths to perform load balancing or in response to detecting a failure or error.

According to a second aspect, a method comprises: determining, at a node in a network, at least one coherent path through the network to a destination by applying a distributed path algorithm to information representing a topology of the network; determining, at the node, at least one non-coherent path through the network to the destination; and selectively transmitting a first packet along the coherent path or the non-coherent path to the destination.

The method may comprise: storing a routing table in a memory of the node, wherein the routing table stores information representing an address or identifier of the destination, at least one next-hop node for the coherent path, and at least one ordered list of links or nodes traversed by the at least one non-coherent path.

The method may comprise: detecting at least one of a failure on a link to at least one next-hop node for the at least one coherent path and an error on the link to the at least one next-hop node for the at least one coherent path; transmitting the first packet along the at least one non-coherent path in response to detecting the at least one of the failure or the error.

The method may comprise: appending the at least one ordered list of links or nodes traversed by the at least one non-coherent path to the first packet; and transmitting the first packet along the at least one non-coherent path indicated by the at least one ordered list of links or nodes.

The method may comprise: receiving a second packet comprising the address or identifier of the destination and an ordered list of links or nodes indicating the at least one non-coherent path.

The method may comprise: identifying an entry in the ordered list of links or nodes that includes an adjacent link that is adjacent to the node.

The method may comprise: popping the entry from the ordered list in response to identifying the entry including the adjacent link; and forwarding the second packet over the adjacent link to the next node in the non-coherent path.

Selectively transmitting the first packet along the at least one coherent path or the at least one non-coherent path may comprise selectively transmitting the first packet to perform load balancing across the at least one coherent path and the at least one non-coherent path.

The method may comprise: identifying a plurality of non-coherent paths to the destination.

The method may comprise: selectively transmitting packets along the coherent path or at least one of the plurality of non-coherent paths to perform load balancing or in response to detecting a failure or error.

Generally, the apparatus according to the first aspect may comprise means for performing one or more or all steps of a method according to the second aspect. The means may include circuitry configured to perform one or more or all steps of the method. The means may include at least one processor and at least one memory including computer program code, wherein the at least one memory and the computer program code are configured to, with the at least one processor, cause the apparatus to perform one or more or all steps of the method.

According to a third aspect, a node comprises: a memory configured to store information representing a topology of a network that includes the node; a processor configured to determine at least one coherent path through the network to a destination by applying a distributed path algorithm to the information representing the topology and to determine at least one non-coherent path through the network to the destination; and a transceiver configured to selectively transmit a first packet along the coherent path or the non-coherent path to the destination.

The memory may be configured to store a routing table comprising information representing an address or identifier of the destination, at least one next-hop node for the coherent path, and at least one ordered list of links or nodes traversed by the at least one non-coherent path.

The transceiver may be configured to transmit the first packet along the at least one non-coherent path in response to detecting at least one of a failure on a link to at least one next-hop node for the at least one coherent path and an error on the link to the at least one next-hop node for the at least one coherent path or to perform load balancing across the at least one coherent path and the at least one non-coherent path.

The processor may be configured to append the at least one ordered list of links or nodes traversed by the at least one non-coherent path to the first packet, and wherein the transceiver is configured to transmit the first packet along the at least one non-coherent path indicated by the at least one ordered list of links or nodes.

The transceiver may be configured to receive a second packet comprising the address or identifier of the destination and an ordered list of links or nodes indicating the at least one non-coherent path.

The processor may be configured to identify an entry in the ordered list of links or nodes that includes an adjacent link that is adjacent to the node.

The processor may be configured to pop the entry from the ordered list in response to identifying the entry including the adjacent link and forward the second packet over the adjacent link to the next node in the non-coherent path.

The processor may be configured to identify a plurality of non-coherent paths to the destination.

The transceiver may be configured to selectively transmit packets along the coherent path or at least one of the plurality of non-coherent paths to perform load balancing or in response to detecting a failure or error.

The node may be implemented as a router in an Internet protocol (IP) network, a node in a multiprotocol label switched (MPLS) network, or a bridge in an Ethernet network.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of a communication network that supports coherent pathways according to some embodiments.
FIG. 2 is a block diagram of a communication network including coherent paths computed using a shortest path tree (SPT) algorithm according to some embodiments.
FIG. 3 is a block diagram of the communication network that includes a loop free alternate (LFA) path according to some embodiments.
FIG. 4 is a block diagram of a communication network that supports coherent, equal cost multipath (ECMP) pathways according to some embodiments.
FIG. 5 is a block diagram of the communication network that illustrates three equal cost coherent pathways according to some embodiments.
FIG. 6 is a block diagram of a communication network that generates non-coherent repair pathways according to some embodiments.
FIG. 7 is a block diagram of the communication network that illustrates a pathway that is not usable as an LFA path according to some embodiments.
FIG. 8 is a block diagram of a communication network that includes a coherent shortest path and a non-coherent repair path according to some embodiments.
FIG. 9 is a block diagram of the communication network that includes a coherent shortest path and multiple non-coherent repair paths according to some embodiments.
FIG. 10 is a flow diagram of a method of configuring a non-coherent path for a destination according to some embodiments.
FIG. 11 is a flow diagram of a method of forwarding packets from an ingress node on a non-coherent path according to some embodiments.
FIG. 12 is a flow diagram of a method of processing a packet at a transit node along a non-coherent path according to some embodiments.

### DETAILED DESCRIPTION

Coherency of the paths computed by the nodes in a network allows the nodes to implement "destination-based routing," which is the default mode of forwarding IP packets and ethernet packets in SPB. In destination-based routing, the nodes store routing information for the network topology in corresponding forwarding tables or routing tables. The routing information stored in the routing table of a node includes an address (or other identifier) of the destination and the next-hop along the computed shortest path from the node to the destination. To transmit a packet to the destination, the node appends the destination address/identifier to the packet and forwards the packet to a second node that is the next-hop indicated in the routing table. The second node receives the packet and makes a forwarding decision based on the destination address/identifier and subsequent next-hop node indicated in the routing table stored by the second node. The process repeats at each node along the path until the packet reaches the destination. The paths through the network are coherent, which guarantees that each node forwards the received packet along the same path to the destination as the path that was computed by the originating node.

Although the nodes and links are generally reliable, forwarding of packets can be disrupted by link failures, node failures, errors in the forwarding tables, and the like. The effects of disruptions are reduced in some cases by computing alternate (or repair) paths that are used in the event of errors or failures. For example, fast rerouting techniques are used to forward IP packets along precomputed loop free alternate (LFA) paths without incurring loss during a period of outage using redundancy in the IP network to provide the LFA paths through the network. The LFA paths are loop-free, coherent paths through the network but the LFA paths are not the shortest possible path from a source node to a destination. Routing information including destination addresses/identifiers and next-hop nodes for the LFA paths are also installed in the routing tables at the nodes. Nodes fast reroute packets along the LFA path to a destination indicated in the routing table in response to detecting failure of a link to the next-hop node along the primary path to the destination. Examples of routing protocols that support LFA based fast rerouting include the Interior Gateway Protocols (IGPs) such as IP networks that operate according to the Intermediate System to Intermediate System (IS-IS) routing protocol, the Open Shortest Path First (OSPF, OSPFv3) protocols, and the like.

The availability of LFA or ECMP paths depends upon the topology of the network. Consequently, LFA or ECMP paths are not necessarily available for fast rerouting in the event of failures or errors. Other paths to the destination (other than LFA or ECMP paths) may be available in the network topology, but the alternate paths are not loop-free or coherent paths and are therefore not available to the nodes for performing fast rerouting of the packets. Furthermore, the total number of available paths through a network may include a significant number of higher cost or non-coherent paths that are not loop-free. Congestion can therefore occur in the coherent network because the nodes route packets along the coherent paths and do not utilize the higher cost or non-coherent paths. Thus, even if the network is operating correctly and there are no failures or errors present, packets are not load balanced over higher cost or non-coherent paths, *e*.*g*., using unequal cost multipath (UCMP) to avoid or relieve congestion.

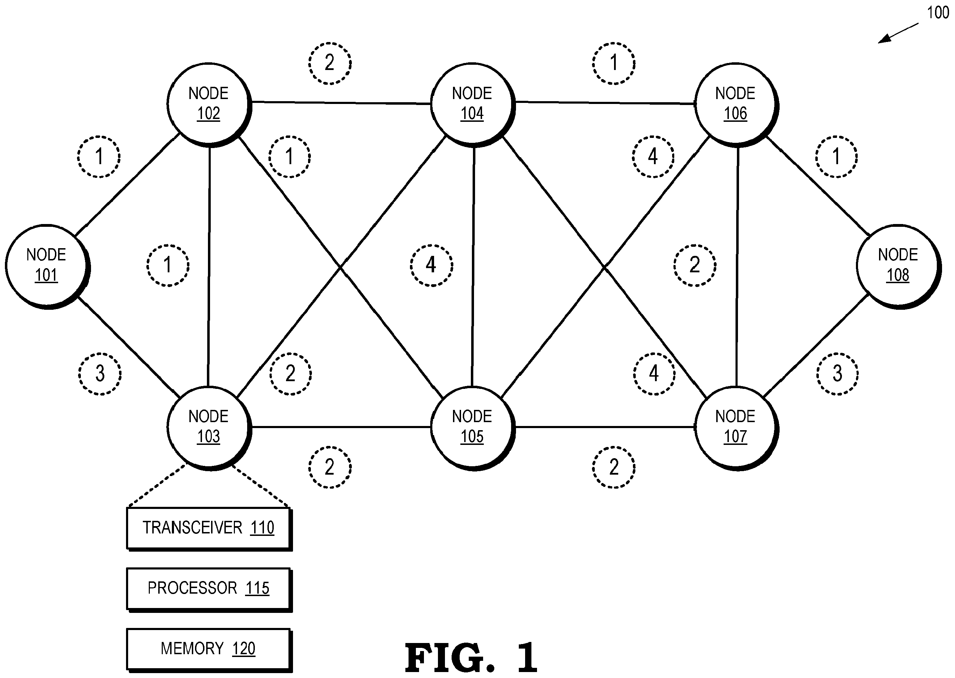

FIGs. 1-12 disclose embodiments of a node in a network that determines coherent paths through the network to corresponding destinations using a distributed path algorithm operating on a topology of the network. The node also determines non-coherent paths through the network to the corresponding destinations and encodes the non-coherent paths as ordered lists of links or nodes traversed by the non-coherent paths to the destinations. The node stores destination addresses/identifiers and corresponding next-hop nodes for the coherent paths in a routing table, as well as storing the destination addresses/identifiers and the ordered lists that represent the non-coherent paths. A source node selectively transmits a packet along the coherent path or the non-coherent path to a destination, *e*.*g*., in response to detecting a failure or error on the link to the next-hop of the coherent path or to perform load-balancing across the coherent and non-coherent paths. To transmit a packet along the coherent path, the node looks up the destination address/identifier of the packet in its routing table and forwards the packet to the next-hop indicated in the routing table. Transit nodes along the coherent path receive the packet, identify the destination address/identifier, and then forward the packet to the next-hop indicated in their routing tables until the packet reaches the destination. To transmit a packet along the non-coherent path, the node looks up the destination address/identifier in its routing table and appends an ordered list of nodes and/or links along the non-coherent path to the packet, which is then forwarded to the next-hop indicated by the ordered list. Transit nodes along the non-coherent path receive the packet, identify an entry including an adjacent link or node in the ordered list, pop the entry from the ordered list if entry indicated adjacent link or an adjacent node, and forward the packet over the adjacent link to the next node in the non-coherent path. If the entry indicated a next node then the routing table in the transit node may have coherent paths as well as non-coherent paths to the next node. The transit node may also make an independent decision to forward the packet to the next node over a non-coherent path. In that case, the transit node pushes the ordered list of nodes and/or links along the non-coherent path to the next node into the existing ordered list in the packet. This process is repeated until the ordered list becomes empty . In some embodiments, the node identifies multiple non-coherent UCMP paths to the destination. The node can selectively transmit packets along the coherent path or any of the non-coherent UCMP paths, *e.g.,* to perform load-balancing or in response to failures/errors.

FIG. 1 is a block diagram of a communication network 100 that supports coherent pathways according to some embodiments. The communication network 100 includes nodes 101, 102, 103, 104, 105, 106, 107, 108, which are collectively referred to herein as "the nodes 101-108." In the illustrated embodiment, the communication network 100 is implemented as a packet-switched network and the nodes 101-108 are implemented as routers that operate according to the Internet protocol (IP). However, the nodes 101-108 can also be implemented as bridges that operate according to the Ethernet protocol. Each of the nodes 101-108 includes a transceiver 110 (or a combination of one or more receivers or transmitters) for transmitting and receiving packets that represent messages exchanged between the nodes 101-108. Each of the nodes 101-108 also includes a processor 115 for executing instructions to perform operations on data and generating results based on performing the operations on the data. Each of the nodes 101-108 further includes a memory 115 that stores information representing the instructions, the data, and the results generated by the processor 115.

Links between the nodes 101-108 are identified by the endpoints of the link. For example, a link between the node 101 and the node 102 is represented as 101→102. Links that convey traffic in different directions between the nodes can be implemented using the same physical connection or different physical connections. For example, the link 101→102 can use the same physical connection is the link 102→101 in some cases and in other cases the link 101→102 uses a different physical connection than the link 102→101. Links that use the same physical connection in different directions can be represented as 101↔102. The links between the nodes 101-108 are assigned costs (which are also referred to as distances or metrics). For example, the cost associated with link 101→102 is one, as indicated by the number in the dashed circle associated with link 101→102. In the illustrated embodiment, the costs of the links are symmetric regarding the direction of the link, although different costs can be associated with links in different directions.

The nodes 101-108 flood the communication network 100 with identifying information. For example, in IP networks, IGPs (Interior Gateway Protocols) running in the nodes 101-108 flood the status of their adjacent links and local networks across the communication network 100. Using this flooding mechanism, the nodes 101-108 build an identical topology database of the communication network 100. Then IGPs at the nodes 101-108 compute the IP routes to every other node (destination) using SPT and builds their corresponding IP routing tables. Well known IGPs are OSPF, IS-IS, OSPFv3, and the like. The nodes 101-108 within the IGP forward packets to respective destinations along the shortest path(s) to the destination. In the case of IP networks, the destination entries in the table would be IP prefixes such as the IP addresses of the nodes 101-108. In multiprotocol label switching (MPLS) networks, the shortest path LSPs (labelled Switched Paths) to destinations are set-up by LDP or SR (Segment Routing), which are based on the shortest path IP routes computed by the IGPs. In a Shortest Path Bridging (SPB) based Ethernet network, the shortest paths to various destination bridges are computed by IS-IS. Ethernet packets from a source bridge to a destination bridge are sent along the shortest path to the destination bridge.

In the illustrated embodiment, the nodes 101-108 build identical typology databases of the communication network 100 based on the flooded information. The topology is represented as a network graph constructed using the nodes 101-108 as vertices and the links as edges in the network graph. The nodes 101-108 independently compute paths to the destinations in the communication network 100, *e.g.,* by running a Shortest Path Tree (SPT) algorithm on the topology represented by the network graph. Packets are therefore conveyed along the shortest path from a source to a destination through the network. The SPT algorithm guarantees that a first shortest path from a first node to the destination includes the shortest path from every transit node traversed by the first shortest path to the destination. Consequently, the paths determined by the SPT algorithm are coherent paths and the communication network 100 is a coherent network.

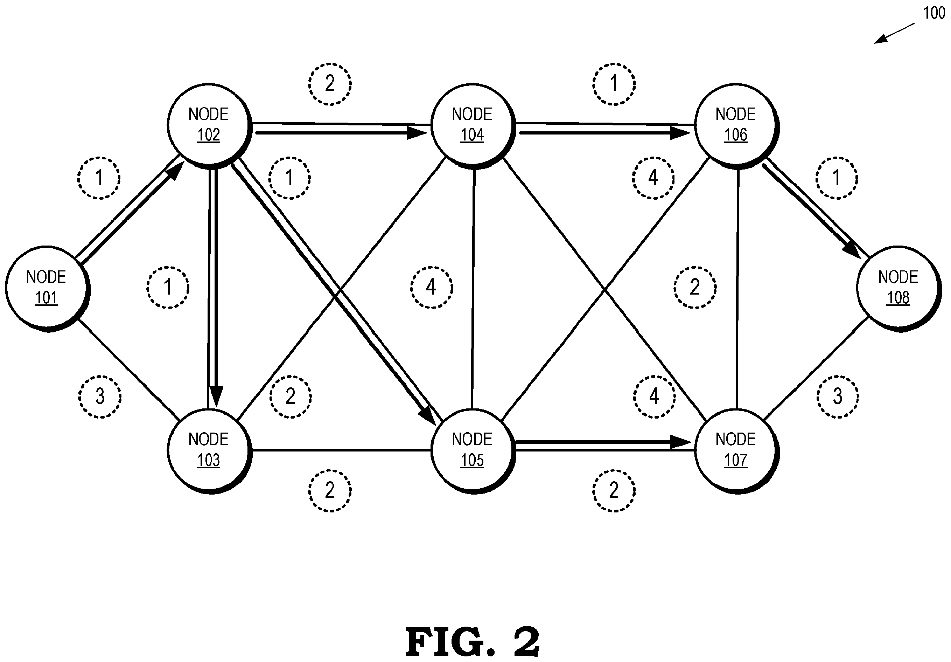

FIG. 2 is a block diagram of a communication network 100 including coherent paths computed using a SPT algorithm according to some embodiments. The nodes 101-108 in the communication network 100 use the SPT algorithm to compute the shortest path from the node 101 to the other nodes 102-108 and the communication network. The paths are computed based on the costs associated with the links in the communication network 100. For example, the shortest path from the node 101 to the node 108 is along the path 101→102→104→106→108 (as indicated by the directional arrows in FIG. 2) at a total cost of five. The shortest paths from the nodes 102, 104, 106 to the same destination 108 are as follows:
Node 102 to node 108: 102→104→106→108
Node 104 to node 108: 104→106→108
Node 106 to node 108: 106→108
Thus, the shortest paths computed by the SPT algorithm result in coherent paths.

The nodes 101-108 also compute the coherent path 101→102→103 from the node 101 to the node 103, the coherent path 101→102→105 from the node 101 to the node 105, and the coherent path 101→102→104→107 from the node 101 to the node 107.

Table 1 is a routing table for the node 101 that is generated by applying the SPT algorithm to the network topology stored at the node 101. The routing table contains entries for destinations in the communication network 100. Each entry maps to the adjacent next-hop along the shortest path to the corresponding destination. The node 101 therefore forwards packets addressed to the destinations along the next-hop links associated with the destinations by the routing table. In response to receiving the packet, the next-hop node independently makes forwarding decisions on the packet based on its own routing table.

**Table 1**

| **Routing Table of Node 101** | |
|---|---|
| **Destination** | **Next-hop** |
| 101 | Local |
| 102 | 101→102 |
| 103 | 101→102 |
| 104 | 101→102 |
| 105 | 101→102 |
| 106 | 101→102 |
| 107 | 101→102 |
| 108 | 101→102 |

Although each node in the shortest path makes its forwarding decisions independently of the other nodes, the coherency of the paths produced by the SPT algorithm guarantees that the path traversed by the packet to the destination is loop free. For example, if the node 101 sends a packet to the node 108, the node 101 uses the routing table shown in Table 1 to identify an entry for the node 108, which indicates that the next-hop is to the node 102 along the adjacent link 101→102. In response to receiving the packet, the node 102 looks up the destination 108 in its routing table and forwards the packet on the adjacent link 102→104. In response to receiving the packet, the node 104 looks up the destination 108 in its routing table and forwards the packet on the adjacent link 104→106. In response to receiving the packet, the node 106 looks up the destination 108 in its routing table and forwards the packet on the adjacent link 106→108. In response to receiving the packet, the node 108 looks up the destination 108 in its routing table and determines that the next-hop is "Local," which means that the packet is addressed to itself. The node 108 can then deliver the packet to its destination.

In shortest path routing networks such as the communication network 100, when a link or a node 101-108 fails, distributed algorithms running in the nodes 101-108 re-compute the routes by taking into consideration the failure. The time taken for this computation is called routing convergence. Until the routing convergence is complete and the nodes 101-108 are converged on a common view of the network, the shortest paths from various nodes 101-108 that traverses the failure are interrupted. Depending on the size of the communication network 100, the convergence time could be a few seconds. Traffic for real-time applications carrying multi-media data such as voice, video, and the like can tolerate convergence times (or latencies) of up to 50 milliseconds (ms). In order to meet the strict tolerances for real-time applications, some embodiments of the communication network 100 implement Fast Re-route (FRR), which is a technique used by shortest path routing networks to reduce the routing convergence time to less than 50 milliseconds. FRR uses a precomputed repair path that bypasses the failure. When a node detects a failure of an adjacent link or an adjacent node, the node switches over to the repair path to reduce traffic loss till the network reconverges. The node that detects failure and performs FRR is called the Point of Local Repair (PLR) node.

In some embodiments, repair paths are computed using Loop Free Alternate (LFA) algorithms. Although LFA is described herein in the context of IP networks, its techniques are generic and are applicable to any shortest path routed networks including SPB. After computation of shortest paths to all known destinations, a PLR node additionally executes the LFA procedure on the network topology to compute a repair path to each destination. LFA ensures that sending a packet along the repair path does not lead to loop, i.e., the shortest path to the destination from any node along the repair path does not include any of its upstream routers along the backup path. Such a path is called LFA path and it means a LFA path is a coherent path. A node calculates the LFA paths in advance and installs the LFA paths against the respective primary paths (shortest paths) to a destination in the routing table. If the next-hop link or the next-hop node in the shortest to a destination fails, then the node (PLR) fast-reroutes the packets along the corresponding repair path.

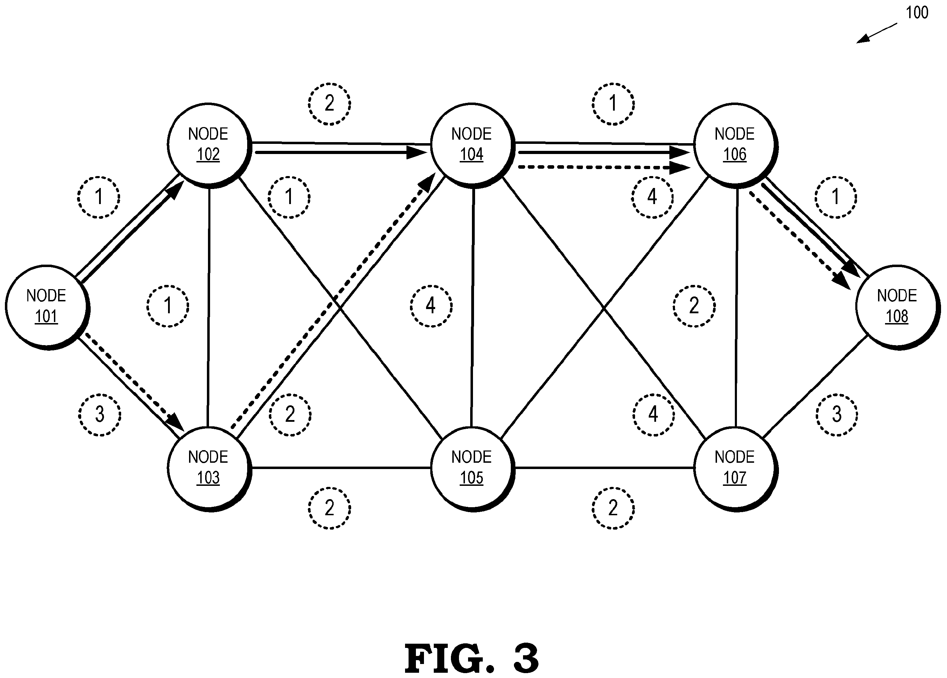

FIG. 3 is a block diagram of the communication network 100 that includes an LFA path according to some embodiments. In the illustrated embodiment, the LFA path 101→103→104→106→108 (indicated by the dashed arrows) is computed by the node 101 to the destination 108 to protect against failure of the adj acent link 101→102 or the adjacent node 102. The cost of the LFA path 101→103→104→106→108 is seven. The LFA path 101→103→104→106→108 is a loop free coherent path because the shortest path from the node 103 to the node 108 is 103→104→106→108. The node 101 therefore reprograms the next-hop 101→103 in the LFA path as a backup next-hop for the entry for node 108 and its routing table, as shown in Table 2.

**Table 2**

| **Routing Table of Node 101** | | |
|---|---|---|
| **Destination** | **Next-hop** | **Backup Next-hop** |
| ... | ... | |
| ... | ... | |
| 108 | 101→102 | 101→103 |

In response to detecting a failure of the link 101→102 or the node 102, the node 101 fast-reroutes the packets to the node 108 via the alternate next-hop 101→103. In response to receiving the packet, the node 103 looks up the destination 108 in its routing table and forwards the packet on the adjacent link 103→104. In response to receiving the packet, the node 104 looks up the destination 108 in its routing table and forwards the packet on the adjacent link 104→106. In response to receiving the packet, the node 106 looks up the destination 108 in its routing table and forwards the packet on the adjacent link 106→108. In response to receiving the packet, the node 108 looks up the destination 108 in its routing table and determines that the next-hop is "Local," which means that the packet is addressed to itself. The node 108 can then deliver the packet to its destination.

Although a single LFA calculation is shown in FIG. 3, in some embodiments all the nodes 101-108 and the communication network 100 compute an LFA path to every destination. For example, if the node 101 sent a packet to the node 108 via the shortest path and the link 104→106 (or the node 106) failed, then the node 104 would fast reroute the packet via the LFA path computed by the node 104 to the node 108.

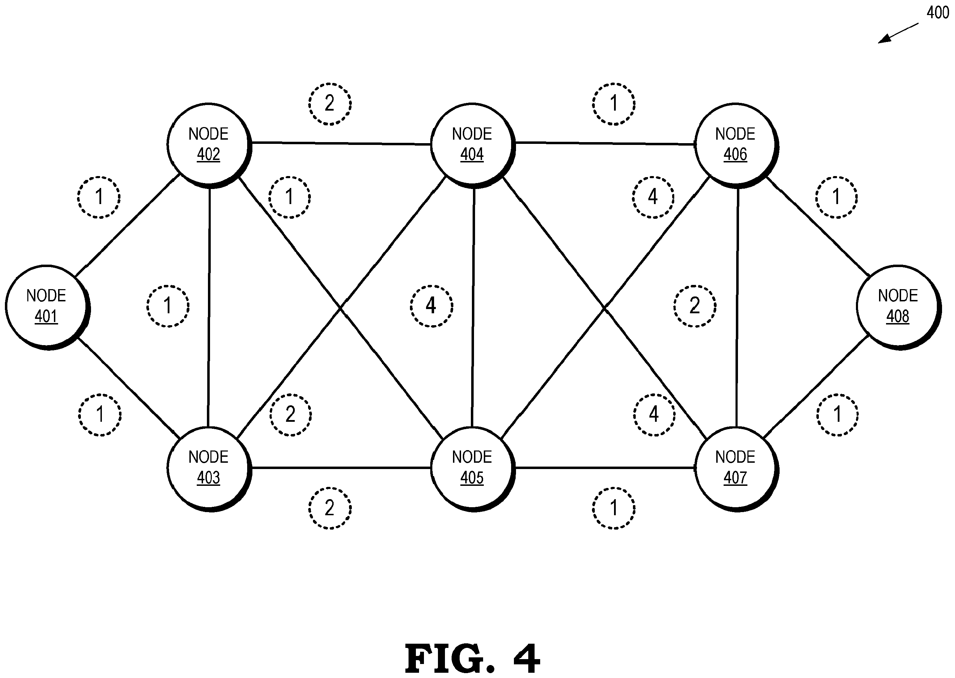

FIG. 4 is a block diagram of a communication network 400 that supports coherent, equal cost multipath (ECMP) pathways according to some embodiments. The communication network 400 includes nodes 401, 402, 403, 404, 405, 406, 407, 408, which are collectively referred to herein as "the nodes 401-408." The communication network 400 differs from the communication network 100 shown in FIG. 1 because the costs associated with the links have been modified. For example, the cost of the link 101→103 is three in the communication network 100 and the cost of the link 401→403 is one in the communication network 400.

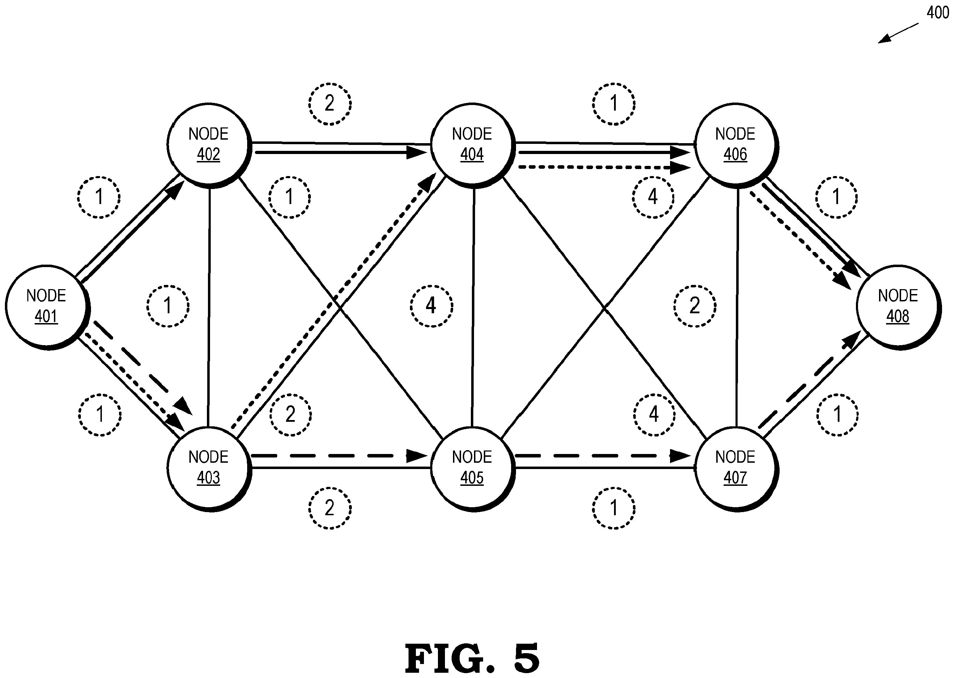

FIG. 5 is a block diagram of the communication network 400 that illustrates three equal cost coherent pathways according to some embodiments. In the illustrated embodiment, the nodes 401-408 compute shortest paths to the destination 408. The shortest path computation results in a set of ECMP paths that all have a cost of five.
Path 1 (solid line): 401→402→404→406→408
Path 2 (dotted line): 401→403→404→406→408
Path 3 (dashed line): 401→403→405→407→408

Table 3 is the routing table for node 401. The entry for the node 408 therefore includes two ECMP next-hop adjacent links corresponding to the adjacent nodes 402, 403

**Table 3**

| **Routing Table of Node 401** | |
|---|---|
| **Destination** | **Next-hop** |
| ... | ... |
| ... | ... |
| 408 | 401→402 |
| | 401→403 |

The node 401 can use the ECMP paths for fast rerouting or load-balancing across the next-hops 401→402, 401→403.

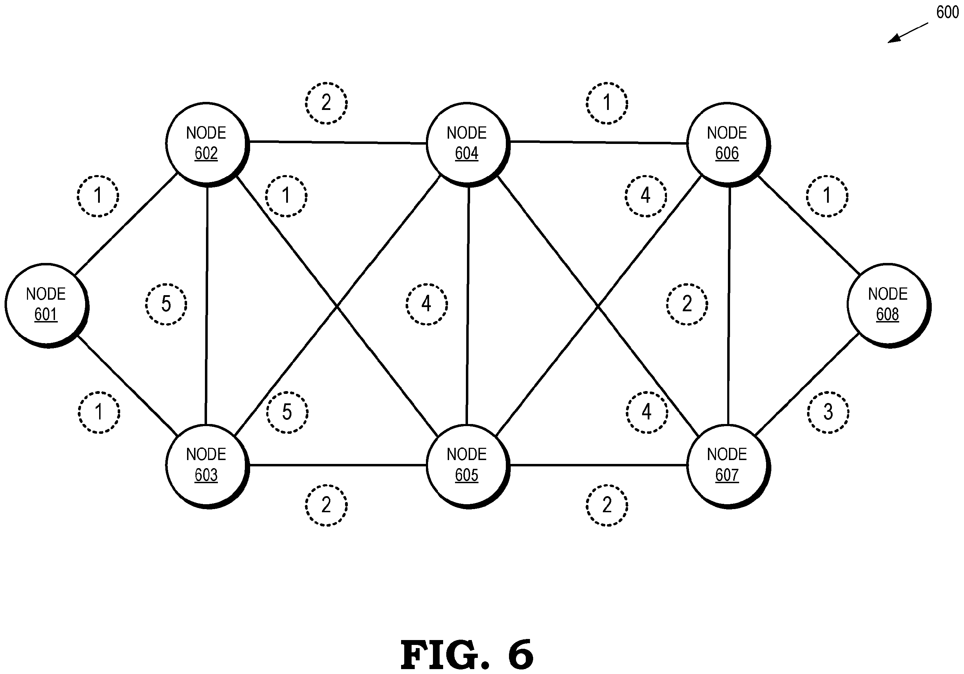

FIG. 6 is a block diagram of a communication network 600 that generates non-coherent repair pathways according to some embodiments. The communication network 400 includes nodes 601, 602, 603, 604, 605, 606, 607, 608, which are collectively referred to herein as "the nodes 601-608." The communication network 600 differs from the communication network 100 shown in FIG. 1 and the communication network 400 shown in FIG. 4 because the costs associated with the links have been modified. For example, the cost of the link 402→403 is one in the communication network 400 and the cost of the link 602→603 is five in the communication network 600.

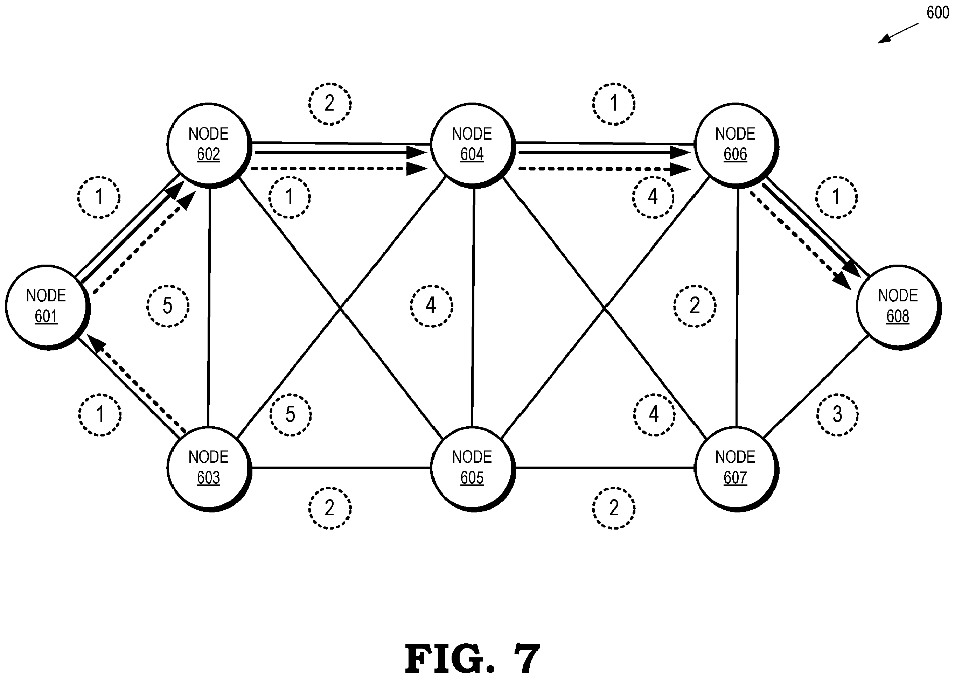

FIG. 7 is a block diagram of the communication network 600 that illustrates a pathway that is not usable as an LFA path according to some embodiments. In the illustrated embodiment, the nodes 601-608 compute shortest paths to the destination 408. The shortest path computation at the node 601 for the destination 608 generates the shortest path 601→602→604→606→608 (at a cost of six, as indicated by the solid line) and the shortest path computation at the node 603 for the destination 608 generates the shortest path 603→601→602→604→606→608 (at a cost of seven, as indicated by the dotted line).

The communication network 600 does not include a coherent, loop-free LFA path from the node 601 to the node 608. Although there are several alternate paths from the node 601 to the node 608 that bypass the node 602, these alternate paths include the link 603→601. For example, the path 601→603→604→606→608, the path 601→603→605→607→608, and the path 601→603→604→607→608 are alternate paths between the node 601 and the node 608, but include the link 601→603 but the shortest path from the node 603 to the node 608 is via the 603→601 link. Consequently, the available alternate paths are not loop free and are non-coherent paths and not candidates for LFA paths.

The topology of the communication network 600 does not support ECMP because the alternate paths available from the node 601 to the node 608 have a higher cost than the shortest path. Examples of alternate paths include:
601→603→605→607→608 (cost of 8)
601→603→604→607→608 (cost of 13)
601→603→602→605→606→608 (cost of 12)
Consequently, all the packets forwarded to the node 608 are forwarded along the shortest path, which may lead to congestion along the shortest path while leaving the other possible (higher cost) alternative paths unutilized. Packets cannot be load balanced over the higher cost alternate paths, e.g., using unequal cost multipath (UCMP) because these alternate paths are non-coherent paths and cause looping of packets.

To address this issue, nodes in communication networks are configured to send packets along a non-coherent path without formation of a loop. The use of non-coherent, loop-free paths as discussed herein in the context of shortest path routing, but these techniques are applicable to any type of coherent network. As discussed herein, a node in a communication network can transmit a packet to a destination along a non-coherent path, without generating loops, by encoding information representing the path into the packet itself. In some embodiments, the path is encoded as an ordered list of links and/or nodes traversed by the path. Each node that receives the packet looks up the topmost entry in the list, looks up the coherent path for the entry (e.g., shortest path for the entry), and forwards the packet to the next-hop of the coherent path. If the entry indicates an adjacent link, then the node pops the entry from the list. Since every node forwards the packet to its adjacent next-hop based on the information representing the path that is encoded in the packet, the packet reaches the destination after traversing the path and without encountering any loops. This enables a node to include a non-coherent path as repair path for FRR or as a path in UCMP set for load balancing.

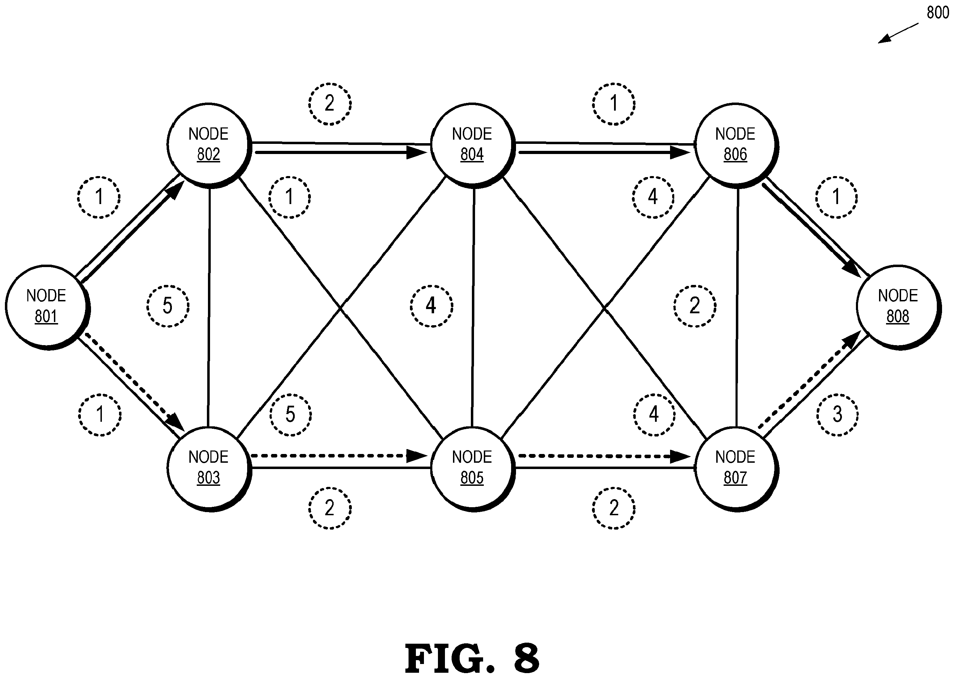

FIG. 8 is a block diagram of a communication network 800 that includes a coherent shortest path and a non-coherent repair path according to some embodiments. The communication network 800 includes nodes 801, 802, 803, 804, 805, 806, 807, 808, which are collectively referred to herein as "the nodes 801-808." In the topology of the communication network 800, the nodes 801-808 compute a shortest path 801→802→804→806→808 (at a cost of five, as indicated by the solid line) from the node 801 to the node 808. The node 801 also selects the loop free, non-coherent alternate path 801→803→805→807→808 (at a cost of eight, as indicated by the dotted line) as a repair path to protect against a failure of the link 801→802 or the node 802.

The node 801 programs the primary next-hop link 801→802 and the backup next-hop link 801→803 into its routing table as indicated in Table 4.

**Table 4**

| **Routing Table of Node 801** | | |
|---|---|---|
| **Destination** | **Next-hop** | **Backup Next-hop** |
| ... | ... | |
| ... | ... | |
| 808 | 801→802 | 801→803, Path = {803→805, 805→807, 807→808} |

The node 801 also programs the routing table with information representing the non-coherent alternate path. In the illustrated embodiment, the information includes an ordered list of the links along the non-coherent path. The information could also include an ordered list of the nodes along the non-coherent path.

As long as the node 801 does not detect a failure along the link 801→802 or at the node 802, the node 801 forwards packets along the shortest path. For example, if the node 801 sends a packet to the node 808, the node 801 uses its routing table to determine that the next-hop is to the node 802 along the adjacent link 801→802. In response to receiving the packet, the node 802 looks up the destination node 808 in its routing table and forwards the packet on the adjacent link 802→804. In response to receiving the packet, the node 804 looks up the destination 808 in its routing table and forwards the packet on the adjacent link 804→806. In response to receiving the packet, the node 806 looks up the destination node 808 in its routing table and forwards the packet on the adjacent link 806→808. In response to receiving the packet, the node 808 looks up the destination 808 in its routing table and determines that the next-hop is "Local," which means that the packet is addressed to itself. The node 808 can then deliver the packet to its destination.

In response to detecting a failure of the link 801→802 or the node 802, the node 801 fast-reroutes the packets to the node 808 via the alternate next-hop 801→803 corresponding to the next link in the non-coherent path. The node 801 also encodes the packet with the information representing the non-coherent path, *e.g.,* the ordered list of links {803→805, 805→807, 807→808}. In response to receiving the packet, the node 803 looks up the topmost entry of the ordered list (803→805) and identifies this as an adjacent link. The node 803 therefore pops the entry and forwards the packet including the ordered list of links {805→807, 807→808} over the adjacent link 803→805. In response to receiving the packet, the node 805 looks up the topmost entry of the ordered list (805→807) and identifies this as an adjacent link. The node 805 therefore pops the entry and forwards the packet including the ordered list of links {807→808} over the adjacent link 805→807. In response to receiving the packet, the node 807 looks up the topmost entry of the ordered list (807→808) and identifies this as an adjacent link. The node 807 therefore pops the entry and forwards the packet over the adjacent link 807→808. In response to receiving the packet, the node 808 looks up the destination 808 in its routing table and determines that the next-hop is "Local," which means that the packet is addressed to itself. The node 808 can then deliver the packet to its destination.

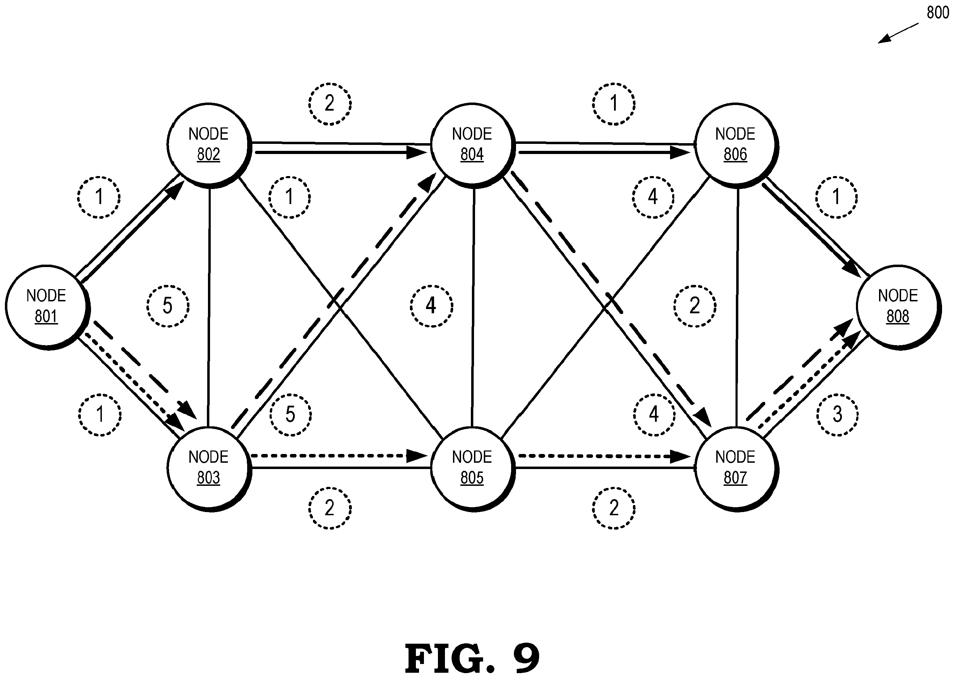

FIG. 9 is a block diagram of the communication network 800 that includes a coherent shortest path and multiple non-coherent paths according to some embodiments. In the topology of the communication network 800, the nodes 801-808 compute a shortest path 801→802→804→806→808 (at a cost of five, as indicated by the solid line) from the node 801 to the node 808. There are multiple alternate paths available from the node 801 to the node 808. In the illustrated embodiment, the node 801 selects two non-coherent paths to be included with the coherent path for UCMP operation. For example, the node 801 selects a first loop free, non-coherent alternate path 801→803→805→807→808 (at a cost of eight, as indicated by the dotted line) and a second loop free, non-coherent alternate path as a repair path 801→803→804→807→808 (at a cost of thirteen, as indicated by the dotted line). The UCMP paths can be used for load-balancing or to protect against a failure of the link 801→802 or the node 802.

The node 801 programs the primary next-hop link 801→802 and the UCMP next-hop links 801→803 into its routing table as indicated in Table 5.

**Table 5**

| **Routing Table of Node 801** | |
|---|---|
| **Destination** | **Next-hop** |
| ... | ... |
| ... | ... |
| 808 | 801→802 |
| | 801→803, Path = {803→805, 805→807, 807-808 } |
| | 801→803, Path = {803→804, 804→806, 806→808} |

The node 801 also programs the routing table to include the corresponding ordered lists of links along the non-coherent paths. There are two entries for the next-hop link 801→803 that correspond to the different non-coherent UCMP paths.

In the illustrated embodiment, the node 801 forwards a first packet to the node 808 along the coherent path. The node 801 uses its routing table to determine that the next-hop is to the node 802 along the adjacent link 801→802 and the node 801 forwards the first packet along the adjacent link 801→802. In response to receiving the first packet, the node 802 looks up the destination node 808 in its routing table and forwards the first packet on the adjacent link 802→804. In response to receiving the first packet, the node 804 looks up the destination node 808 in its routing table and forwards the first packet on the adjacent link 804→806. In response to receiving the first packet, the node 806 looks up the destination node 808 in its routing table and forwards the first packet on the adjacent link 806→808. In response to receiving the first packet, the node 808 looks up the destination 808 in its routing table and determines that the next-hop is "Local," which means that the first packet is addressed to itself. The node 808 can then deliver the first packet to its destination.

The node 801 intends to transmit a second packet to the node 808 via the alternate next-hop 801→803 corresponding to the next link in the first non-coherent path. The node 801 encodes the second packet with the information representing the first non-coherent path, *e.g.,* the ordered list of links {803→805, 805→807, 807→808}. In response to receiving the second packet, the node 803 looks up the topmost entry of the ordered list (803→805) and identifies this as an adjacent link. The node 803 therefore pops the entry and forwards the second packet including the ordered list of links {805→807, 807→808} over the adjacent link 803→805. In response to receiving the second packet, the node 805 looks up the topmost entry of the ordered list (805→807) and identifies this as an adjacent link. The node 805 therefore pops the entry and forwards the second packet including the ordered list of links {807→808} over the adjacent link 805→807. In response to receiving the second packet, the node 807 looks up the topmost entry of the ordered list (807→808) and identifies this as an adjacent link. The node 807 therefore pops the entry and forwards the second packet over the adjacent link 807→808. In response to receiving the second packet, the node 808 looks up the destination 808 in its routing table and determines that the next-hop is "Local," which means that the second packet is addressed to itself. The node 808 can then deliver the second packet to its destination.

The node 801 intends to transmit a third packet to the node 808 via the alternate next-hop 801→803 corresponding to the next link in the second non-coherent path. The node 801 encodes the third packet with the information representing the second non-coherent path, *e.g.,* the ordered list of links {803→804, 804→807, 807→808}. In response to receiving the third packet, the node 803 looks up the topmost entry of the ordered list (803→804) and identifies this as an adjacent link. The node 803 therefore pops the entry and forwards the third packet including the ordered list of links {804→807, 807→808} over the adjacent link 803→804. In response to receiving the third packet, the node 804 looks up the topmost entry of the ordered list (804→807) and identifies this as an adjacent link. The node 804 therefore pops the entry and forwards the third packet including the ordered list of links {807→808} over the adjacent link 804→807. In response to receiving the third packet, the node 807 looks up the topmost entry of the ordered list (807→808) and identifies this as an adjacent link. The node 807 therefore pops the entry and forwards the third packet over the adjacent link 807→808. In response to receiving the third packet, the node 808 looks up the destination 808 in its routing table and determines that the next-hop is "Local," which means that the third packet is addressed to itself. The node 808 can then deliver the third packet to its destination.

When a transit node along a non-coherent path tries to forward a packet based on the topmost entry in the non-coherent path encoded in the packet, it is possible that the next-hop for that topmost entry has failed. In the examples herein, an entry in the encoded path is always an adjacent link, but it is also possible that the entry is a node downstream along the non-coherent path. If the topmost entry of the ordered list of links or nodes identified a node, it is possible to have repair path to the node for FRR. In that case, the transit node performs FRR and sends the packet via the repair path. If there is no repair path, then no FRR is possible at transit node and the packet is dropped. If the topmost entry of the ordered list identified an adjacent link, then no FRR is possible at the transit node since the transit node is agnostic of the identifications of subsequent entries in the encoded path.

To enable a transit node to perform FRR on a failure along the non-coherent path, the ingress node may select a node along the path that is downstream to the failure to be the target node to which the transit node should FRR the packet. The target node could be the next next-hop node of the next-hop node/link being protected for failure. For example, if the link 803→805 on first non-coherent path fails (or the node 805 fails) during transmission of the second packet on the first non-coherent path, then the node 803 could FRR the packet to node 807 along a path that bypasses the links 803→805 and 805→807. In that case, the node 801 would encode the second packet (P2) as {803→805 <Protection Path: Path = 807, Num Skip = 1>, 805→807, 807→808}<P2> and transmit the second packet over the link 801→803. The Protection Path is encoded to protect against failure of 801→803 link, wherein the path includes only a single hop 807. The 'Num Skip' identifies the number of entries further to be popped by the transit node 803 from the received path, if it decides to FRR the packet using the encoded protection path, because the protection path bypasses those entries. On receiving the packet, the node 803 looks up the topmost entry 803→805 and identifies the next-hop link as 803→805. It finds that link 803→805 failed, so the node 803 uses the encoded Protection Path to FRR the packet. Since Num_Skip is 1, the node 803 also pops the entry 805→807 from the path. Then the node 803 forwards the second packet including the ordered list {807→808} to the node 807 based on the entry of the node 807 in its routing table. A Protection Path may be encoded for every hop in the non-coherent path.

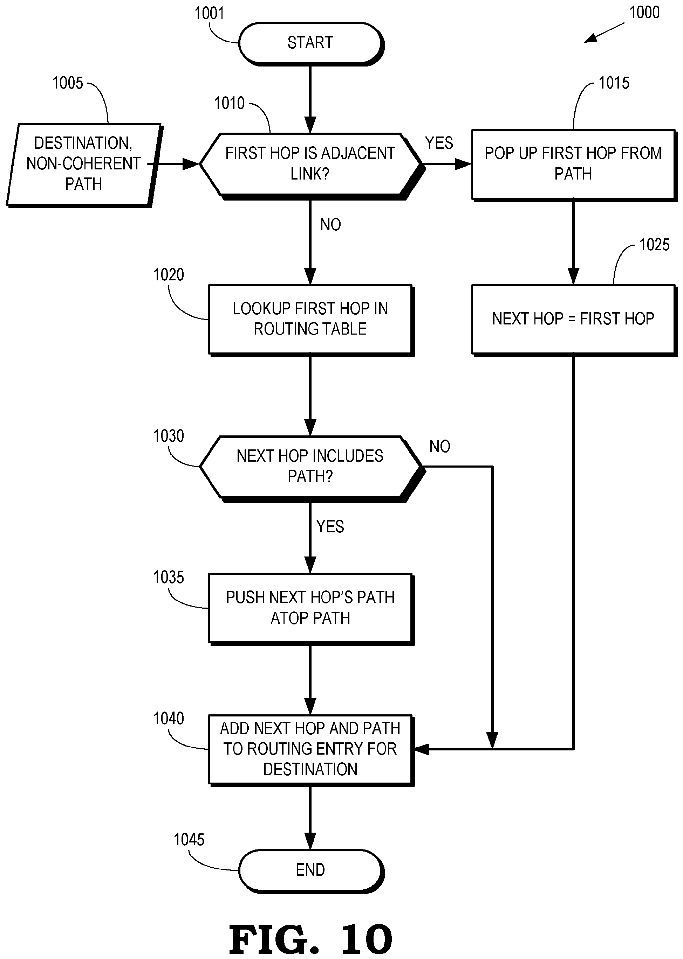

FIG. 10 is a flow diagram of a method 1000 of configuring a non-coherent path for a destination according to some embodiments. The method 1000 is implemented in some embodiments of the communication network 800 shown in FIG. 8. For example, the method 1000 can be implemented in one or more of the nodes 801-808 shown in FIG. 8.

The method 1000 starts at block 1001. A node that implements the method 1000 receives input 1005 including information indicating a destination and information representing the non-coherent path, *e.g.,* an ordered list of links or nodes that are to be traversed by packets along the non-coherent path.

At decision block 1010, the node determines whether a topmost entry in the ordered list that represents the non-coherent path identifies an adjacent link to the node. If so, the method 1000 flows to block 1015. Otherwise the method 1000 flows to block 1020.

At block 1015, the node pops the first stop (or adjacent link) from the ordered list that represents the non-coherent path. At block 1025, the node sets the popped hop (or adjacent link) as the next-hop for the non-coherent path. The method 1000 then flows to block 1040.

At block 1020, the node looks up the first hop (a node) in the routing table and resolves the next-hop to the node. In some embodiments, the route to the node can have multiple next-hops.

At decision block 1030, the node determines whether the next-hop to the node includes a non-coherent path. For example, the route entry to the node can have one or more UCMP next-hops, as discussed herein. If the next-hop includes a non-coherent path, the method 1000 flows to the block 1035. Otherwise, the method 1000 flows to the block 1040.

At block 1035, the node pushes the ordered list representing the non-coherent path to the next-hop atop the input non-coherent path. At block 1040, the node installs the next-hop accompanied by the non-coherent path into the routing entry of the destination. Packets that are sent to the destination over the next-hop on encoded with the non-coherent path. The method 1000 then flows to the block 1045 and the method 1000 ends.

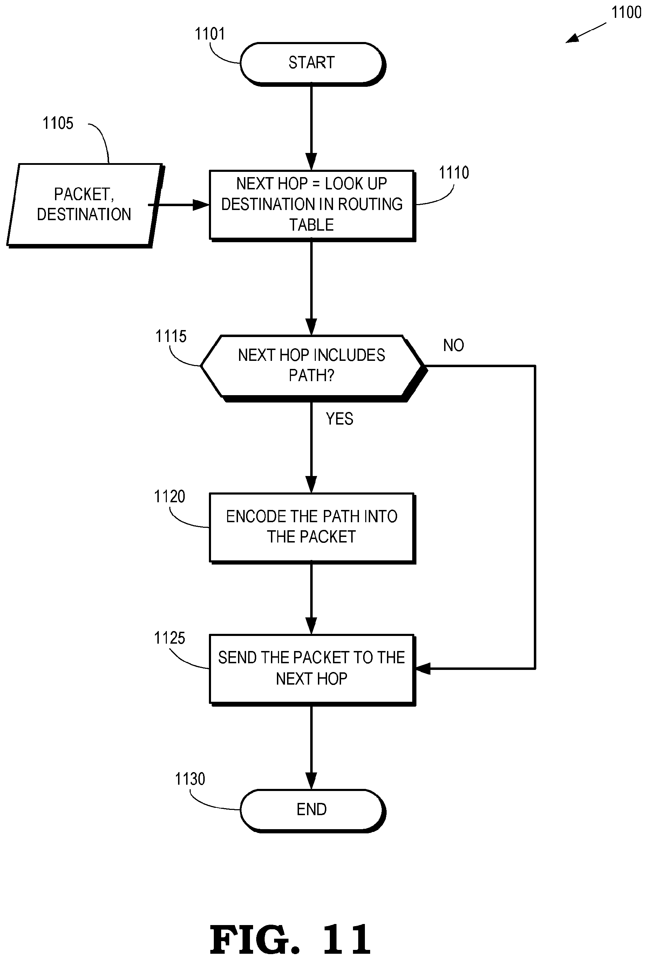

FIG. 11 is a flow diagram of a method 1100 of forwarding packets from an ingress node on a non-coherent path according to some embodiments. The method 1100 is implemented in some embodiments of the communication network 800 shown in FIG. 8. For example, the method 1100 can be implemented in one or more of the nodes 801-808 shown in FIG. 8.

The method 1100 starts at block 1101. An ingress node that implements the method 1100 receives input 1105 including a packet and information indicating a destination of the packet.

At block 1110, the node looks up the destination in the routing table and resolves the next-hop to be used for forwarding the packet. For example, the destination may have ECMP or UCMP next-hops and the node chooses the appropriate destination from among the available alternatives. In some embodiments, the next-hop has a backup next-hop and the next-hop has failed. In that case, the backup next-hop is the resolved next-hop.

At decision block 1115, the node determines whether the next-hop includes a non-coherent path. If so, the method 1100 flows to block 1120. Otherwise, the method 1100 flows to the block 1125.

At block 1120, the node pushes the non-coherent path to the next-hop atop the input packet.

At block 1125, the node transmits the packet to the next-hop. The method 1100 then flows to the block 1130 and the method 1100 ends.

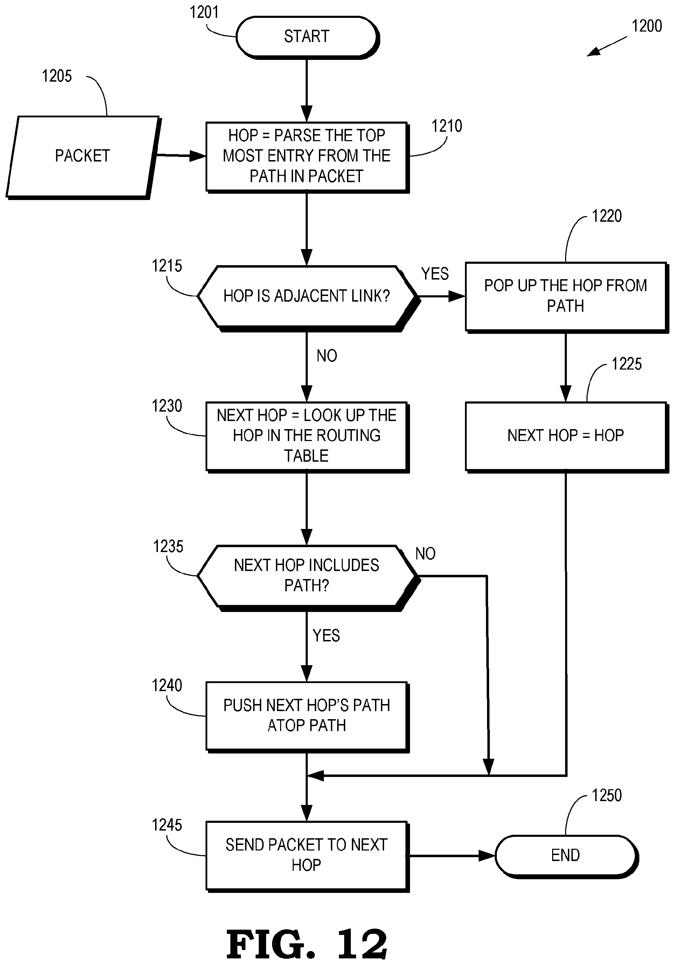

FIG. 12 is a flow diagram of a method 1200 of processing a packet at a transit node along a non-coherent path according to some embodiments. The method 1200 is implemented in some embodiments of the communication network 800 shown in FIG. 8. For example, the method 1200 can be implemented in one or more of the nodes 801-808 shown in FIG. 8.

The method 1200 starts at block 1201. A node that implements the method 1200 receives input 1205 including a packet that is encoded with a non-coherent path, *e.g.,* a packet that includes an ordered list of links are nodes that represent a non-coherent path.

At block 1210, the node parses the topmost entry in the non-coherent path that is encoded into the packet. At decision block 1215, the node determines whether the topmost entry identifies an adjacent link. If so, the method 1200 flows to the block 1220. Otherwise, the method 1200 flows to the block 1230.

At block 1220, the node pops the topmost entry (corresponding to the adjacent link) from the ordered list representing the non-coherent path. At block 1225, the node sets the topmost entry as the next-hop for the packet. The method 1200 then flows to the block 1240.

At block 1230, the node looks up the topmost entry (e.g., a node) in its routing table and resolves the next-hop to the node associated with the topmost entry. For example, the destination may have ECMP or UCMP next-hops and the node chooses the appropriate next-hop from among the available alternatives. In some embodiments, the next-hop has a backup next-hop and the next-hop has failed. In that case, the backup next-hop is the resolved next-hop.

At decision block 1235, the node determines whether the next-hop to the node includes the non-coherent path. If the next-hop includes a non-coherent path, the method 1200 flows to the block 1245. Otherwise, the method 1200 flows to the block 1240.

At block 1240, the node pushes the non-coherent path to the next-hop atop the path in the packet. At block 1245, the node transmits the packet to the next-hop. The method 1200 then flows to the block 1250 and the method 1200 ends.

Embodiments of the techniques disclosed herein can be implemented in different packet switching technologies including IP networks, MPLS, and Ethernet networks. Thus, the coherent links and coherent networks operate at a corresponding IP layer, MPLS layer, or Ethernet layer.

In IP networks, IGPs employed for shortest path routing build the network topology database in every node (router). In some embodiments, the IGPs are enhanced for computation of repair paths or UCMP that include non-coherent paths. As discussed herein, one or more non-coherent paths are encoded into an IP packet as a source route. Both IPv4 and IPv6 support source routing.

In source routing, an ordered list of node or link addresses is encoded into the IP packet by an ingress router, wherein the list describes the path to be traversed by the packet (the encoded path is called the source route). A node that receives a source routed packet looks up the topmost entry in the source route and forwards the packet to the node or link identified by the entry. If the entry identifies a link or the forwarding router itself then the entry is skipped from the source route. IPv4 provides Strict Source Route (SSR) and Loose Source Route (LSR) as Options in IPv4 header. SSR typically includes an ordered set of link addresses to be traversed by the packet. LSR typically contains at least one node address, which makes it a "loose" route because there could be multiple paths to the node from its upstream node. IPv6 provides Routing Header (an IPv6 extension header) for encoding an ordered set of node or link addresses to be traversed by the packet. So, in IPv6, the non-coherent path is encoded in the Routing Header.

In MPLS networks implemented with Segment Routing (SR), the MPLS network uses the IGPs to build the network topology and for distributing MPLS labels for network components such as link/adjacencies and routers. The topology database built by every router is reused for computing maximally disjoint trees of this invention. In some embodiments, IGPs are enhanced for computation of repair paths or UCMP that includes non-coherent paths.

An MPLS router maintains two forwarding tables to make forwarding decisions on MPLS packets - FTN (FEC-to-NHLFE) Table and ILM (Incoming Label Map) Table. The FEC in MPLS refers to a classification of packets that are mapped to a MPLS LSP (Label Switched Path). For example, an IP Prefix FEC means packets to all destinations within an IP Prefix are transmitted on the LSP. An FTN Table is used by a router that can act as an ingress for an LSP. A FTN Table entry maps a FEC to its Next-Hop Label Forwarding Entry (NHLFE). The NHLFE contains all information needed to push MPLS label(s) to the next-hop. When an unlabelled packet is sent over an LSP, the router looks up the FTN entry for the FEC associated with the packet and then pushes the required label(s) and sends the MPLS packet to the next-hop of the LSP. An ILM Table is used by a router that can act as transit or egress router for an LSP.

An ILM table maps a label to its NHLFE. When a router receives an MPLS packet, it looks up the topmost label into the ILM Table, pops the topmost label and makes a forwarding decision based on the NHLFE, i.e either pushes label(s) and forwards to next-hop of the LSP (this is transit router) or forwards based on native forwarding tables for the FEC of the packet (this is egress router). In the case of IP Prefix FECs, typically a router other than the egress router acts as both ingress router as well as transit router for the corresponding MPLS LSP. This would be the case with SR. for example, referring to the communication network 800 shown in FIGs. 8 and 9, if the communication network 800 is a SR based MPLS network, the IP Prefix FEC is of type IPv4, and the IPv4 address of node X is IP-X. Then the IP Prefix FEC for node X is IP-X/32 and LX-Y is the label assigned by router Y for IP Prefix FEC IP-X/32 (i.e identification of router X). The label LX-Y may be assigned from the local label space of router Y or may be assigned from a network wide unique global label space. When a router sends a packet over a non-coherent path, then the path is encoded as MPLS label stack.

The nodes in an Ethernet network are referred to as switches or bridges that operate at Ethernet layer and forward Ethernet packets. Ethernet bridges use a table called a MAC forwarding table to control the forwarding of packets between ports. The table starts empty and entries are added as the bridge receives packets. The source MAC address in the Ethernet header of a packet is added as an entry into the table with the link of arrival as the forwarding link for the MAC address. If the destination MAC address entry is not found in the MAC forwarding table, the packet is flooded to all other links of the bridge, except the one from which it was received. By means of these flooded packets, a host in the network responds and a MAC database entry is created. So, both source and destination addresses are used in this process: source addresses are recorded as entries in the MAC forwarding table, while destination addresses are looked up in the table and matched to the proper link to send the packet to. Such bridges are also referred to as "self-learning bridges" since MAC forwarding table is built automatically by snooping source MAC addresses of received packets.

The Ethernet network has redundant paths for resiliency but these can cause loops for flooded ethernet packets. To avoid loops in packet forwarding paths, traditional ethernet networks deploy the Spanning Tree Protocol (STP) and its variants like rapid spanning tree protocol (RSTP) and multiple spanning tree protocol (MSTP). In operation, STP builds a loop-free logical topology for Ethernet networks and the basic function is to prevent loops and the broadcast radiation that results from them. The STP also allows a network design to include backup links providing fault tolerance if an active link fails.

There are several key limitations on traditional ethernet bridging including, but not limited to:
- STP convergence of the network is quite slow and inefficient. The convergence time depends on the size of the network and it can take minutes to converge.
- Since STP convergence time is dependent on the size of the network, so there is a limit on the size of an ethernet network.
- Multipath routing is not possible since a learnt MAC address is bound to a specific link. So, all packets destined to a specific MAC address is forwarded along a fixed path.

The SPB algorithm is intended to simplify the creation and configuration of Ethernet networks. The SPB algorithm eliminates STP and its variants. STP blocked any redundant paths that could result in a loop, whereas SPB allows all paths to be active with multiple equal cost paths, provides much larger layer ethernet topologies, supports faster convergence times, and improves the efficiency by allowing traffic to load share across all paths of a mesh network. SPB provides logical Ethernet networks on native Ethernet infrastructures using a link state protocol to advertise both topology and logical network membership. The control plane is based on the Intermediate System to Intermediate System (IS-IS) routing protocol, which can leverage one or more predefined extensions. SPB is equivalent to IGP (Interior Gateway Protocols such as OSPF, IS-IS, OSPFv3, and the like) based IP networks in the ethernet networks. So, in SPB, bridges are not self-learning bridges, but they build the MAC forwarding table based on the topology database built by link state protocols. Every bridge compute the paths to all external MAC addresses in the topology database by using a variable of Djikstra's SPT algorithm called ECT (Equal Cost Tree). The entries are then installed in a MAC forwarding table.

In SPB, IS-IS is employed already build the network topology database in every node (bridge), which is reused for computing maximally disjoint trees. In some embodiments, IS-IS is enhanced for computation of repair paths or UCMP that includes non-coherent paths. The non-coherent path is encoded as a list of MAC addresses of the nodes/links in the path. An ordered list of node or link MAC addresses is encoded into Ethernet packet by an ingress router, wherein the list describes the path to be traversed by the packet. The encoded path is called the Ethernet Source Route. A node that receives a packet with Ethernet Source Route, looks up the topmost entry in the Ethernet Source Route and forwards the packet to the node or link identified by the entry. If the entry identifies an adjacent link or the forwarding node itself then the entry is skipped from the Ethernet Source Route.

Alternately, each node/bridge and a link in the network may be assigned as network wide unique VLAN Identifier (VID). The VID space used for bridge or link identifier for this invention is orthogonal to the VIDs used for VLAN based partitioning of network segments, as the former is not encoded into the packet as VLAN tag, rather encoded within Ethernet Source Route. The VID space used to allocate network-wide unique bridge and link identifiers is referred to herein as the "bridge identifier VID space." A benefit of using the VID as bridge or link identifier is that it enables compact encoding of Ethernet Source Route since size of a VID is 12 bits as opposed to 6-octets of a MAC address. However, VID based scheme requires centralized management of the VID space and explicit configuration of VIDs into bridges as identifiers.

In some embodiments, certain aspects of the techniques described above may implemented by one or more processors of a processing system executing software or computer program code. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc , magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory), or coupled to the computer system via a wired or wireless network (e.g., network accessible storage (NAS)).

As used herein, the term "circuitry" may refer to one or more or all of the following:
a) hardware-only circuit implementations (such as implementations and only analog and/or digital circuitry) and
b) combinations of hardware circuits and software, such as (as applicable):
   i.a combination of analog and/or digital hardware circuit(s) with software/firmware and
   ii.any portions of a hardware processor(s) with software (including digital signal processor(s), software, and memory(ies) that work together to cause an apparatus, such as a mobile phone or server, to perform various functions) and
c) hardware circuit(s) and/or processor(s), such as a microprocessor(s) or a portion of a microprocessor(s), that requires software (e.g., firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. Apparatus comprising means for performing:
determining at least one coherent path through a network to a destination by applying a distributed path algorithm to information representing a topology of a network including the destination;
determining at least one non-coherent path through the network to the destination; and
selectively transmitting a first packet along the coherent path or the non-coherent path to the destination.

2. The apparatus according to claim 1, further comprising means for performing:
storing a routing table comprising information representing an address or identifier of the destination, at least one next-hop node for the coherent path, and at least one ordered list of links or nodes traversed by the at least one non-coherent path.

3. The apparatus according to claim 2, further comprising means for performing at least one of:
transmitting the first packet along the at least one non-coherent path in response to detecting at least one of a failure on a link to at least one next-hop node for the at least one coherent path and an error on the link to the at least one next-hop node for the at least one coherent path; or
performing load balancing across the at least one coherent path and the at least one non-coherent path.

4. The apparatus according to claim 3, further comprising means for performing:
appending the at least one ordered list of links or nodes traversed by the at least one non-coherent path to the first packet; and
transmitting the first packet along the at least one non-coherent path indicated by the at least one ordered list of links or nodes.

5. The apparatus according to claim 2, further comprising means for performing:
receiving a second packet comprising the address or identifier of the destination and an ordered list of links or nodes indicating the at least one non-coherent path.

6. The apparatus according to claim 5, further comprising means for performing:
identifying an entry in the ordered list of links or nodes that includes an adjacent link that is adjacent to the node.

7. The apparatus according to claim 6, further comprising means for performing:
popping the entry from the ordered list in response to identifying the entry including the adjacent link; and
forwarding the second packet over the adjacent link to the next node in the non-coherent path.

8. The apparatus according to any of claims 1 to 7, further comprising means for performing:
identifying a plurality of non-coherent paths to the destination.

9. The apparatus according to claim 8, further comprising means for performing:
selectively transmitting packets along the coherent path or at least one of the plurality of non-coherent paths to perform load balancing or in response to detecting a failure or error.

10. A method comprising:
determining, at a node in a network, at least one coherent path through the network to a destination by applying a distributed path algorithm to information representing a topology of the network;
determining, at the node, at least one non-coherent path through the network to the destination; and
selectively transmitting a first packet along the coherent path or the non-coherent path to the destination.

11. The method according to claim 10, further comprising:
storing a routing table in a memory of the node, wherein the routing table stores information representing an address or identifier of the destination, at least one next-hop node for the coherent path, and at least one ordered list of links or nodes traversed by the at least one non-coherent path.

12. The method according to claim 11, further comprising:
detecting at least one of a failure on a link to at least one next-hop node for the at least one coherent path and an error on the link to the at least one next-hop node for the at least one coherent path;
transmitting the first packet along the at least one non-coherent path in response to detecting the at least one of the failure or the error;
appending the at least one ordered list of links or nodes traversed by the at least one non-coherent path to the first packet; and
transmitting the first packet along the at least one non-coherent path indicated by the at least one ordered list of links or nodes.

13. The method according to claim 11, further comprising:
receiving a second packet comprising the address or identifier of the destination and an ordered list of links or nodes indicating the at least one non-coherent path;
identifying an entry in the ordered list of links or nodes that includes an adjacent link that is adjacent to the node;
popping the entry from the ordered list in response to identifying the entry including the adjacent link; and
forwarding the second packet over the adjacent link to the next node in the non-coherent path.

14. The method according to claim 10, wherein selectively transmitting the first packet along the at least one coherent path or the at least one non-coherent path comprises selectively transmitting the first packet to perform load balancing across the at least one coherent path and the at least one non-coherent path.

15. The method according to claim 10, further comprising:
identifying a plurality of non-coherent paths to the destination; and
selectively transmitting packets along the coherent path or at least one of the plurality of non-coherent paths to perform load balancing or in response to detecting a failure or error.
